# FASCICULE DE BREVET EUROPEEN

(11) **EP 2 979 921 B1**
(45) Date de publication et mention de la délivrance du brevet: **03.05.2017**
(21) Numéro de dépôt: 15179199.3
(22) Date de dépôt: 30.07.2015
(51) Int. Cl.: B60N 2/48, H01R 13/627, H01R 13/639, H01R 103/00, H01R 13/58

(54) **SYSTÈME DE MONTAGE ET DE CONNEXION ÉLECTRIQUE D'UN APPUI-TÊTE SUR UN DOSSIER DE SIÈGE DE VÉHICULE AUTOMOBILE**
SYSTEM ZUR MONTAGE UND ZUM ELEKTRISCHEN ANSCHLUSS EINER KOPFSTÜTZE AUF EINER RÜCKENLEHNE EINES AUTOSITZES
SYSTEM FOR INSTALLATION AND ELECTRICAL CONNECTION OF A HEADREST ON A BACKREST OF A MOTOR VEHICLE SEAT

(30) Priorité: 31.07.2014 FR 1457448
(43) Date de publication de la demande: 03.02.2016
(73) Titulaire: Cera TSC, 75008 Paris (FR)
(72) Inventeur: GANIER, David, 02190 Guignicourt (FR); AIRAULT, Jean-Yves, 56430 Concoret (FR)
(74) Mandataire: Sayettat, Julien Christian

(56) Documents cités:
- EP-A1- 1 760 840
- WO-A1-2008/091072
- DE-B3-102004 007 325
- FR-A1- 2 911 819

## Description

L'invention concerne un système de montage et de connexion électrique d'un appui-tête sur un dossier de siège de véhicule automobile et un procédé de montage d'un tel système.

Il est connu (voir le document EP-A-1760860) de réaliser un système de montage et de connexion électrique d'un appui-tête sur un dossier de siège de véhicule automobile, ledit système comprenant :
- une tige tubulaire de montage dudit appui-tête sur ledit dossier, ladite tige étant destinée à être saillante d'un coussin dudit appui-tête vers le bas,
- un manchon de réception de ladite tige en coulissement, de manière à permettre un réglage en hauteur dudit appui-tête, ledit manchon étant destiné à être associé audit dossier,
- un premier connecteur électrique emboité en extrémité libre de ladite tige, ledit connecteur présentant une section analogue à celle de ladite tige de manière à former un prolongement de ladite tige vers le bas, ledit premier connecteur saillant dudit manchon vers le bas,
- un premier réseau de fils issus dudit premier connecteur et passant dans ladite tige de manière à permettre l'alimentation d'un appareil électrique disposé dans ledit coussin,
- un deuxième connecteur électrique emboité avec ledit premier connecteur,
- un deuxième réseau de fils issus dudit deuxième connecteur en vue d'être relié à un générateur de courant extérieur audit appui-tête.

Avec un tel agencement, l'utilisateur est susceptible de retirer la tige du manchon par traction de ladite tige vers le haut, les connecteurs se déconnectant l'un de l'autre, ce qui peut occasionner des difficultés pour reconnecter les connecteurs entre eux lorsque la tige est à nouveau insérée dans le manchon.

L'invention a pour but de pallier cet inconvénient.

A cet effet, et selon un premier aspect, l'invention propose un système de montage et de connexion électrique d'un appui-tête sur un dossier de siège de véhicule automobile, ledit système comprenant :
- une tige tubulaire de montage dudit appui-tête sur ledit dossier, ladite tige étant destinée à être saillante d'un coussin dudit appui-tête vers le bas,
- un manchon de réception de ladite tige en coulissement, de manière à permettre un réglage en hauteur dudit appui-tête, ledit manchon étant destiné à être associé audit dossier,
- un premier connecteur électrique emboité en extrémité libre de ladite tige, ledit connecteur présentant une section analogue à celle de ladite tige de manière à former un prolongement de ladite tige vers le bas, ledit premier connecteur saillant dudit manchon vers le bas,
- un premier réseau de fils issus dudit premier connecteur et passant dans ladite tige de manière à permettre l'alimentation d'un appareil électrique disposé dans ledit coussin,
- un deuxième connecteur électrique emboité avec ledit premier connecteur,
- un deuxième réseau de fils issus dudit deuxième connecteur en vue d'être relié à un générateur de courant extérieur audit appui-tête,
ledit système comprenant en outre un dispositif de verrouillage, ledit dispositif étant emboité sur ledit premier connecteur et s'étendant radialement au-delà dudit premier connecteur de manière à empêcher un retrait de ladite tige dudit manchon par traction de ladite tige vers le haut.

Dans cette description, les termes de positionnement dans l'espace (haut, bas,...) sont pris en référence au système disposé dans le véhicule.

Le terme « radial » est pris en référence à l'axe selon lequel s'étend la tige.

Avec l'agencement proposé, un retrait de la tige du manchon par traction de ladite tige vers le haut est rendu impossible, l'appui-tête étant rendu non démontable du dossier, ce qui évite à l'utilisateur de se retrouver en situation d'avoir à reconnecter les connecteurs entre eux, avec les difficultés de connexion qui peuvent se présenter.

Selon un deuxième aspect, l'invention propose un procédé de montage d'un tel système.

D'autres particularités et avantages de l'invention apparaîtront dans la description qui suit, faite en référence aux figures jointes, dans lesquelles :

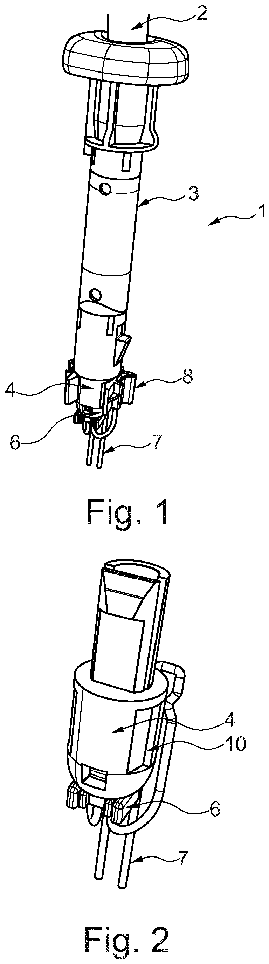

- la figure 1 est une vue en perspective d'un dispositif selon une réalisation,
- la figure 2 est une vue en perspective des connecteurs de la figure 1 emboités entre eux,

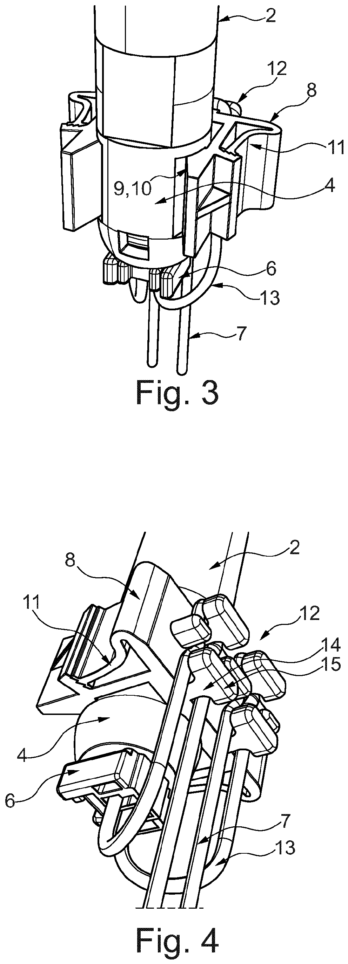

- la figure 3 est une vue en perspective analogue à la figure 2, le premier connecteur étant emboité en extrémité libre d'une tige et le dispositif de verrouillage étant emboité sur ledit premier connecteur,
- la figure 4 correspond à la figure 3 selon un autre angle de vue.

En référence aux figures, on décrit un système 1 de montage et de connexion électrique d'un appui-tête sur un dossier de siège de véhicule automobile, ledit système comprenant :
- une tige 2 tubulaire de montage dudit appui-tête sur ledit dossier, ladite tige étant destinée à être saillante d'un coussin dudit appui-tête vers le bas,
- un manchon 3 de réception de ladite tige en coulissement, de manière à permettre un réglage en hauteur dudit appui-tête, ledit manchon étant destiné à être associé audit dossier,
- un premier connecteur 4 électrique - comprenant notamment un corps en matériau plastique moulé - emboité en extrémité libre de ladite tige, ledit connecteur présentant une section analogue à celle de ladite tige de manière à former un prolongement de ladite tige vers le bas, ledit premier connecteur saillant dudit manchon vers le bas,
- un premier réseau, non représenté, de fils issus dudit premier connecteur et passant dans ladite tige de manière à permettre l'alimentation d'un appareil électrique - tel qu'un haut-parleur ou un écran vidéo - disposé dans ledit coussin,
- un deuxième connecteur 6 électrique - comprenant notamment un corps en matériau plastique moulé - emboité avec ledit premier connecteur,
- un deuxième réseau 7 de fils issus dudit deuxième connecteur en vue d'être relié à un générateur de courant extérieur audit appui-tête,
ledit système comprenant en outre un dispositif de verrouillage 8 - notamment en matériau plastique moulé -, ledit dispositif étant emboité sur ledit premier connecteur et s'étendant radialement au-delà dudit premier connecteur de manière à empêcher un retrait de ladite tige dudit manchon par traction de ladite tige vers le haut.

Selon la réalisation représentée, le dispositif de verrouillage 8 présente une section en forme générale de U, de manière à s'emboiter par translation radiale sur le premier connecteur 4 en le prenant en pincement entre les branches du U.

Selon la réalisation représentée, les extrémités du U sont pourvues de formes en harpon 9 coopérant avec des butées 10 prévues sur le premier connecteur 4.

Selon la réalisation représentée, le dispositif de verrouillage 8 comprend des jambes de force 11 agencées pour permettre un renforcement de l'effort de serrage par les branches du U.

Selon la réalisation représentée, l'extrémité libre du premier connecteur 4 présente une forme en ogive, de manière à faciliter son introduction dans le manchon 3.

Selon la réalisation représentée, le dispositif de verrouillage 8 est pourvu d'un moyen de retenue 12 du deuxième réseau 7 de fils, de sorte que ledit deuxième réseau forme une boucle 13 entre ledit moyen et le deuxième connecteur 6.

Un tel agencement permet de « donner du mou » au deuxième réseau 7 pour éviter tout risque de déconnexion des fils du deuxième connecteur 6 en cas de manipulation brutale de l'appui-tête lors de son réglage en hauteur.

Selon la réalisation représentée, le moyen de retenue 12 comprend une pluralité de saillies 14 - ici pourvues chacune à leur extrémité libre d'une collerette 15 - autour desquelles sont entortillés les fils du deuxième réseau 7.

On décrit à présent un procédé de montage d'un tel système 1, ledit procédé comprenant les étapes suivantes :
- prévoir un appui-tête pourvu d'une tige 2 de montage tubulaire, ladite tige étant saillante d'un coussin dudit appui-tête vers le bas,
- prévoir un manchon 3 de réception de ladite tige en coulissement, ledit manchon étant associé audit dossier,
- emboiter un premier connecteur 4 électrique en extrémité libre de ladite tige, ledit connecteur présentant une section analogue à celle de ladite tige de manière à former un prolongement de ladite tige vers le bas,
- insérer ladite tige dans ledit manchon de manière à faire ressortir ledit premier connecteur dudit manchon,
- emboiter un deuxième connecteur 6 avec ledit premier connecteur,
- emboiter un dispositif de verrouillage 8 sur ledit premier connecteur, ledit dispositif s'étendant radialement au-delà dudit premier connecteur de manière à empêcher un retrait de ladite tige dudit manchon.

Selon la réalisation représentée, le procédé comprend en outre l'étape de réaliser la retenue du deuxième réseau 7 de fils par un moyen de retenue 12 prévu sur le dispositif de verrouillage 8, de sorte que ledit deuxième réseau forme une boucle 13 entre ledit moyen et le deuxième connecteur 6.

## Revendications

1. Système (1) de montage et de connexion électrique d'un appui-tête sur un dossier de siège de véhicule automobile, ledit système comprenant :
• une tige (2) tubulaire de montage dudit appui-tête sur ledit dossier, ladite tige étant destinée à être saillante d'un coussin dudit appui-tête vers le bas,
• un manchon (3) de réception de ladite tige en coulissement, de manière à permettre un réglage en hauteur dudit appui-tête, ledit manchon étant destiné à être associé audit dossier,
• un premier connecteur (4) électrique emboité en extrémité libre de ladite tige, ledit connecteur présentant une section analogue à celle de ladite tige de manière à former un prolongement de ladite tige vers le bas, ledit premier connecteur saillant dudit manchon vers le bas,
• un premier réseau de fils issus dudit premier connecteur et passant dans ladite tige de manière à permettre l'alimentation d'un appareil électrique disposé dans ledit coussin,
• un deuxième connecteur (6) électrique emboité avec ledit premier connecteur,
• un deuxième réseau (7) de fils issus dudit deuxième connecteur en vue d'être relié à un générateur de courant extérieur audit appui-tête,
ledit système étant **caractérisé en ce qu'**il comprend en outre un dispositif de verrouillage (8), ledit dispositif étant emboité sur ledit premier connecteur et s'étendant radialement au-delà dudit premier connecteur de manière à empêcher un retrait de ladite tige dudit manchon par traction de ladite tige vers le haut.

2. Système selon la revendication 1, **caractérisé en ce que** le dispositif de verrouillage (8) présente une section en forme générale de U, de manière à s'emboiter par translation radiale sur le premier connecteur (4) en le prenant en pincement entre les branches du U.

3. Système selon la revendication 2, **caractérisé en ce que** les extrémités du U sont pourvues de formes en harpon (9) coopérant avec des butées (10) prévues sur le premier connecteur (4).

4. Système selon l'une des revendications 2 ou 3, **caractérisé en ce que** le dispositif de verrouillage (8) comprend des jambes de force (11) agencées pour permettre un renforcement de l'effort de serrage par les branches du U.

5. Système selon l'une quelconque des revendications 1 à 4, **caractérisé en ce que** l'extrémité libre du premier connecteur (4) présente une forme en ogive, de manière à faciliter son introduction dans le manchon (3).

6. Système selon l'une quelconque des revendications 1 à 5, **caractérisé en ce que** le dispositif de verrouillage (8) est pourvu d'un moyen de retenue (12) du deuxième réseau (7) de fils, de sorte que ledit deuxième réseau forme une boucle (13) entre ledit moyen et le deuxième connecteur (6).

7. Système selon la revendication 6, **caractérisé en ce que** le moyen de retenue (12) comprend une pluralité de saillies (14) autour desquelles sont entortillés les fils du deuxième réseau (7).

8. Procédé de montage d'un système selon l'une quelconque des revendications 1 à 7, ledit procédé comprenant les étapes suivantes :
• prévoir un appui-tête pourvu d'une tige (2) de montage tubulaire, ladite tige étant saillante d'un coussin dudit appui-tête vers le bas,
• prévoir un manchon (3) de réception de ladite tige en coulissement, ledit manchon étant associé audit dossier,
• emboiter un premier connecteur (4) électrique en extrémité libre de ladite tige, ledit connecteur présentant une section analogue à celle de ladite tige de manière à former un prolongement de ladite tige vers le bas,
• insérer ladite tige dans ledit manchon de manière à faire ressortir ledit premier connecteur dudit manchon,
• emboiter un deuxième connecteur (6) avec ledit premier connecteur,
• emboiter un dispositif de verrouillage (8) sur ledit premier connecteur, ledit dispositif s'étendant radialement au-delà dudit premier connecteur de manière à empêcher un retrait de ladite tige dudit manchon.

9. Procédé selon la revendication 8, **caractérisé en ce qu'**il comprend en outre l'étape de réaliser la retenue du deuxième réseau (7) de fils par un moyen de retenue (12) prévu sur le dispositif de verrouillage (8), de sorte que ledit deuxième réseau forme une boucle (13) entre ledit moyen et le deuxième connecteur (6).

## Patentansprüche

1. System (1) zur Montage und elektrischen Verbindung einer Kopfstütze an einer Sitzlehne eines Kraftfahrzeugs, wobei das System Folgendes umfasst:
- einen rohrförmigen Schaft (2) zur Montage der Kopfstütze auf der Lehne, wobei der Schaft ausgelegt ist, um von einem Kissen der Kopfstütze nach unten vorzuspringen,
- eine Hülse (3) zur gleitenden Aufnahme des Schafts, um eine Höhenverstellung der Kopfstütze zu ermöglichen, wobei die Hülse ausgelegt ist, um mit der Lehne assoziiert zu sein,
- einen ersten elektrischen Verbinder (4), der am freien Ende des Schafts eingeschoben ist, wobei der Verbinder einen Abschnitt analog demjenigen des Schafts aufweist, um eine Verlängerung des Schafts nach unten zu bilden, wobei der erste Verbinder aus der Hülse nach unten vorspringt,
- ein erstes Netz von Drähten, die aus dem ersten Verbinder stammen und im Schaft verlaufen, um die Versorgung eines elektrischen Geräts zu ermöglichen, das in dem Kissen angeordnet ist,
- einen zweiten elektrischen Verbinder (6), der in den ersten Verbinder eingeschoben ist,
- ein zweites Netz (7) von Drähten, die aus dem zweiten Verbinder stammen, um mit einem Stromgenerator außerhalb der Kopfstütze verbunden zu sein,
wobei das Verfahren **dadurch gekennzeichnet ist, dass** es außerdem eine Verriegelungsvorrichtung (8) umfasst, wobei die Vorrichtung auf dem ersten Verbinder eingeschoben ist und sich radial über den ersten Verbinder hinaus erstreckt, um einen Rückzug des Schafts von der Hülse durch Ziehen des Schafts nach oben zu verhindern.

2. System nach Anspruch 1, **dadurch gekennzeichnet, dass** die Verriegelungsvorrichtung (8) einen Abschnitt mit der allgemeinen Form eines U aufweist, um sich durch radiale Translation auf dem ersten Verbinder (4) einzuschieben, indem er zwischen den Schenkeln des U gequetscht wird.

3. System nach Anspruch 2, **dadurch gekennzeichnet, dass** die Enden des U mit Speerformen (9) ausgestattet sind, die mit Anschlägen (10) zusammenarbeiten, die auf dem ersten Verbinder (4) bereitgestellt sind.

4. System nach einem der Ansprüche 2 oder 3, **dadurch gekennzeichnet, dass** die Verriegelungsvorrichtung (8) Stützträger (11) umfasst, die angeordnet sind, um einer Verstärkung der Spannkraft durch die Schenkel des U zu ermöglichen.

5. System nach einem der Ansprüche 1 bis 4, **dadurch gekennzeichnet, dass** das freie Ende des ersten Verbinders (4) die Form eines Spitzbogens aufweist, um seine Einführung in die Hülse (3) zu erleichtern.

6. System nach einem der Ansprüche 1 bis 5, **dadurch gekennzeichnet, dass** die Verriegelungsvorrichtung (8) mit einem Rückhaltemittel (12) des zweiten Netzes (7) von Drähten ausgestattet ist, so dass das zweite Netz eine Schleife (13) zwischen dem Mittel und dem zweiten Verbinder (6) bildet.

7. System nach Anspruch 6, **dadurch gekennzeichnet, dass** das Rückhaltemittel (12) eine Vielzahl von Vorsprüngen (14) umfasst, um die die Drähte des zweiten Netzes (7) gedreht sind.

8. Verfahren zur Montage eines Systems nach einem beliebigen der Ansprüche 1 bis 7, wobei das Verfahren die folgenden Schritte umfasst:
- Bereitstellen einer Kopfstütze, ausgestattet mit einem rohrförmigen Montageschaft (2), wobei der Schaft von einem Kissen der Kopfstütze nach unten vorspringt,
- Bereitstellen eine Hülse (3) zur gleitenden Aufnahme des Schafts, wobei die Hülse mit der Lehne assoziiert ist,
- Einschieben eines ersten elektrischen Verbinders (4) mit freiem Ende des Schafts, wobei der Verbinder einen Abschnitt analog demjenigen des Schafts aufweist, um eine Verlängerung des Schafts nach unten zu bilden,
- Einführen des Schafts in die Hülse, um den ersten Verbinder wieder aus der Hülse heraustreten zu lassen,
- Einschieben eines zweiten Verbinders (6) mit dem ersten Verbinder,
- Einschieben einer Verriegelungsvorrichtung (8) auf den ersten Verbinder, wobei sich die Vorrichtung radial über den ersten Verbinder hinaus erstreckt, um einen Rückzug des Schafts aus der Hülse zu verhindern.

9. Verfahren nach Anspruch 8, **dadurch gekennzeichnet, dass** es außerdem den Schritt des Durchführens des Rückhalts des zweiten Netzes (7) von Drähten durch ein Rückhaltemittel (12) umfasst, das auf der Verriegelungsvorrichtung (8) vorgesehen ist, so dass das zweite Netz eine Schleife (13) zwischen dem Mittel und dem zweiten Verbinder (6) bildet.

## Claims

1. System (1) for installation and electrical connection of a headrest on a backrest of a motor vehicle seat, said system comprising:
- a tubular rod (2) for assembly of said head rest on said seat back, said rod being designed to project downwards from a cushion of said head rest,
- a sleeve (3) into which said rod fits by sliding, to enable adjustment of the height of said head rest, said sleeve being designed to be fitted onto said back,
- a first electrical connector (4) that engages into the free end of said rod, said connector having a cross-section similar to that of said rod so as to extend said rod downwards, said first connector projecting downwards from said sleeve,
- a first network of wires output from said first connector and passing into said rod to bring a power supply to an electrical device located in said cushion,
- a second electrical connector (6) fitted onto said first connector,
- a second network (7) of wires derived form said second connector that will be connected to a current generator outside said head rest,
said system being **characterised in that** it also comprises a locking device (8), said device being engaged on said first connector and extending radially beyond said first connector so as to prevent said rod from being pulled upwards out of said sleeve.

2. System according to claim 1, **characterised in that** the cross-section of the locking device (8) is generally U-shaped, so as to engage onto the first connector (4) by radial translation, by trapping it between the flanges of the U.

3. System according to claim 2, **characterised in that** the ends of the U are provided with harpoon shapes (9) cooperating with stops (10) provided on the first connector (4).

4. System according to claim 2 or 3, **characterised in that** the locking device (8) comprises braces (11) formed to enable strengthening of the clamping force by the flanges of the U.

5. System according to any one of claims 1 to 4, **characterised in that** the free end of the first connector (4) is shell-shaped to facilitate its entry into the sleeve (3).

6. System according to any one of claims 1 to 5, **characterised in that** the locking device (8) is provided with a means (12) of retaining the second network (7) of wires, such that said second network forms a loop (13) between said means and the second connector (6).

7. System according to claim 6, **characterised in that** the retaining device (12) comprises a plurality of projections (14) around which the wires of the second network (7) are twisted.

8. Method for assembling a system according to any one of claims 1 to 7, said method including the following steps:
- provide a head rest fitted with a tubular assembly rod (2), said rod projecting downwards from a cushion of said head rest,
- provide a sleeve (3) into which said rod fits by sliding, said sleeve being associated with said back,
- engage a first electric connector (4) into the free end of said rod, said connector having a cross-section similar to that of said rod so as to form a downwards extension of said rod,
- insert said rod into said sleeve to bring said first connector out of said sleeve,
- engage a second connector (6) onto said first connector,
- engage a locking device (8) on said first connector, said device extending radially beyond said first connector to prevent said rod from being pulled out of said sleeve.

9. Method according to claim 8, **characterised in that** also comprises the step to retain the second network (7) of wires by a retaining means (12) provided on the locking device (8), such that said second network forms a loop (13) between said means and the second connector (6).
